# EUROPEAN PATENT APPLICATION

(11) **EP 4 253 231 A1**
(43) Date of publication of application: **04.10.2023**
(21) Application number: 20963569.7
(22) Date of filing: 27.11.2020
(51) Int. Cl.: B64C 27/08, B64C 39/02, B64D 9/00

(54) **AIRCRAFT, LANDING METHOD, SYSTEM, AND PROGRAM**

(71) Applicant: Aeronext Inc., Shibuya-ku Tokyo 1500021 (JP)
(72) Inventor: SUZUKI, Yoichi, Tokyo 150-0021 (JP)
(74) Representative: Herrero & Asociados, S.L.
(86) International application number: PCT/JP2020/044369
(87) International publication number: WO 2022/113305

(57) **Abstract**

[PROBLEM TO BE SOLVED] To provide an aircraft, etc., which can reduce the shock to a mounted object during unloading and improve the quality of delivery by lowering the mounted object from the aircraft after landing while maintaining its posture and releasing it so that the shock generated to the mounted object at the time of detachment is within a predetermined shock range. [Solution] An aircraft equipped with a holding mechanism that holds the mounted object, wherein the holding mechanism moves the mounted object at least vertically downward after landing legs of the aircraft are grounded, while maintaining the mounted object horizontal.

## Description

### [TECHNICAL FIELD]

This invention relates to aircraft, a landing method, a system, and a program.

### [BACKGROUND ART]

In recent years, research and demonstration tests have been conducted for the practical application of services using drones, unmanned aerial vehicles (UAVs), and other flying vehicles (hereinafter collectively referred to as "flying vehicles"). In the development of home delivery services using autonomous or remotely operated aircraft flight systems, there is a need to improve the speed from ordering to receiving products on e-commerce sites, to realize immediate delivery to remote islands, and to improve the quality of transportation.

Deliveries that particularly require immediacy include urgent items such as medical equipment and specimens, and meals purchased by end users, many of which are currently transported using four-wheeled vehicles or two-wheeled vehicles. The time required for overland transportation varies greatly depending on the availability of paved roads and traffic conditions, and in some cases, transportation takes a long time due to the difficulty of accessing straight distances by vehicle in the mountains and on remote islands.

In Patent Literature 1, an aircraft capable of carrying luggage is disclosed that automatically flies and detaches its cargo, enabling home delivery by air to a predetermined location.

### [PRIOT ART LIST]

### [Patent Literature]

[Patent Literature 1] US9536216B1
[Patent Literature 2] US10618655B2
[Patent Literature 3]

### [SUMMARY OF THE INVENTION]

### [TECHNICAL PROBLEM]

Patent Literature 1 discloses an aircraft and delivery system that can provide an automated delivery service by an aircraft capable of carrying a package and releasing the package after the aircraft flies to its destination using GPS signals.

This allows cargo to reach its destination without being affected by the presence or absence of roads, road conditions, etc.

However, both the methods of separating packages disclosed in Patent Literature 1 and Patent Literature 2 cause vibration and shock during the package separation process, which reduces the quality of delivery.

In the Patent Literature 1, the attitude of the cargo can be maintained while falling due to the center of gravity of the cargo, but it is difficult to control the attitude of the cargo due to the bounce after it contacts the ground, and there is also the risk that the cargo may be disfigured, mixed, or damaged due to the impact when it contacts the ground.

When luggage is suspended by a string-like member, as in Patent Literature 2, and luggage is descended without landing the aircraft, the impact when it reaches the ground may be reduced, but it is difficult to prevent the oscillation that occurs during the descent of the luggage. For example, when an aircraft is hit by a crosswind near the ground surface, the aircraft tilts its flight section upwind to stay in place. This swing of the aircraft is transmitted to the suspended luggage, which also sways. This phenomenon is more pronounced when the luggage is lightweight.

Particularly, in the case of cargoes such as cooked food, where the taste, appearance, and other qualities of the product are impaired by crumbling or mixing of products, and in the case of cargoes such as medical equipment and precision instruments, where it is desirable to avoid impact as much as possible and damage may be expected depending on the degree of impact, the method of dropping the cargoes to the loading surface by dropping them or oscillating them by dropping them from the flight vehicle in flight by wires, etc., is not optimal.

Therefore, one object of this invention is to provide an aircraft or the like that can improve the quality of delivery by reducing the shock to the load during unloading by lowering the load from the aircraft after landing while maintaining the attitude of the load and releasing it so that the shock generated on the load at the time of detachment is within a predetermined shock range.

### [TECHNICAL SOLUTION]

According to the invention, it is possible to provide an aircraft equipped with a holding mechanism for holding a payload, such as an aircraft or the like in which the holding mechanism moves the payload at least vertically downward to ground after the landing legs of the aircraft are grounded, while maintaining the payload horizontal.

### [ADVANTAGEOUS EFFECTS]

According to the invention, an aircraft or the like can be provided that reduces the impact on the load during unloading and improve the quality of delivery.

### [BRIEF DESCRIPTION OF THE DRAWINGS]

FIG. 1 shows a conceptual view of an aircraft according to the invention from the side.
FIG. 2 shows a side view of the aircraft of FIG. 1 in cruise.
FIG. 3 shows a top view of the aircraft of FIG. 1.
FIG. 4 shows a side view of the aircraft of FIG. 1 in the landing state.
FIG. 5 shows a side view of the aircraft of FIG. 4 when it descends its payload.
FIG. 6 shows a front view of the aircraft of FIG. 4.
FIG. 7 shows a front view of the aircraft of FIG. 5.
FIG. 8 shows a side view of an example of a method of descending a payload of an aircraft.
FIG. 9 shows a side view of an example of a method of descending a payload of an aircraft according to the invention.
FIG. 10: Side view of an example of a method of descending a payload of an aircraft according to the invention.
FIG. 11 shows a side view of the aircraft shown in FIG. 10 during the descent of the payload.
FIG. 12 shows a functional block diagram of the aircraft of FIG. 1.
FIG. 13 shows a side view of an example of a holding mechanism of an aircraft according to the invention.
FIG. 14 shows a partial front view of the holding mechanism of FIG. 9.
FIG. 15 shows a front view of a retention mechanism after an aircraft has landed according to the invention.
FIG. 16 shows a front view of the aircraft shown in FIG. 15 when the aircraft descends from its mount.
FIG. 17 shows a front view of a retention mechanism provided by an aircraft according to the invention.
FIG. 18 shows a front view of the retention mechanism shown in FIG. 17 when the load is lowered.
FIG. 19 shows a front view of the retention mechanism of FIG. 17 when the load is released.
FIG. 20 shows a front view of the holding mechanism of FIG. 17 after releasing the load.
FIG. 21 shows a front view of the holding mechanism of FIG. 17 after releasing the loaded object.
FIG. 22 shows a front view of the holding mechanism of the aircraft according to the invention during landing.
FIG. 23 shows a front view of the retention mechanism of FIG. 22 after releasing the load.
FIG. 24 shows a front view of the retention mechanism of FIG. 22 after releasing the load.
FIG. 25 shows a front view of the holding mechanism of the aircraft according to the invention during landing.
FIG. 26 shows a front view of the retention mechanism of FIG. 19 when the load is released.
FIG. 27 shows a front view of the retention mechanism of FIG. 19 after releasing the load.
FIG. 28 shows a side view of an example of an insert member of the retention section.
FIG. 29 shows a front view of the insert member of the holding section of FIG. 22.
FIG. 30 shows a front view of an example of the holding mechanism configuration of an aircraft according to the invention during landing.
FIG. 31 shows a front view of the retention mechanism of FIG. 24 when releasing the load.

### [DETAILED DESCRIPTION OF THE EMBODIMENTS]

The following is a list and description of the contents of this embodiment of the invention. An aircraft, a landing method, a system, and a program according to this embodiment of the invention consist of the following:
[Item 1] An aircraft equipped with a holding mechanism that holds a payload,
   wherein the holding mechanism is designed to move the payload at least vertically downward while maintaining its horizontal orientation upon contact of landing legs with the ground.
[Item 2] The aircraft of item 1,
   wherein the holding mechanism is designed to move the payload until it touches the ground.
[Item 3] The aircraft as in items 1 or 2,
   wherein the holding mechanism has a holding part that holds the bottom of the payload.
[Item 4] The aircraft as in any one of items 1 to 3,
   wherein the payload has a base member having a predetermined height at its bottom.
[Item 5] The aircraft as in items 1 or 2,
   wherein the holding mechanism has a holding part that holds a side portion of the payload.
[Item 6] The aircraft as in items 1 or 2,
   wherein the holding mechanism has a holding part that holds the upper portion of the payload.
[Item 7] A method for loading a payload using an aircraft equipped with a holding mechanism, comprising:
   a step of moving the payload at least vertically downward while holding the payload horizontally using the holding mechanism of the aircraft, after the landing legs of the aircraft has touched the ground.
[Item 8] A system of executing a loading method on an aircraft equipped with a holding mechanism, comprising:
   a processor that is equipped on the aircraft and executes the loading method,
   wherein the loading method comprises a step of moving the payload at least in a downward vertical direction while maintaining the payload in a horizontal position using the holding mechanism of the aircraft after the landing legs of the aircraft is in contact with the ground.
[Item 9] A program for executing a loading method on an aircraft equipped with a holding mechanism by a processor installed in the aircraft,
   wherein the loading method comprises a step of using the holding mechanism to move the payload at least vertically downwards while maintaining its horizontal orientation after the landing legs of the aircraft has touched down.

### [DETAILED DESCRIPTION OF THE EMBODIMENTS]

The following is a description of the aircraft, landing method, system, and program according to this embodiment, with reference to the drawings.

### <Details of the first embodiment>

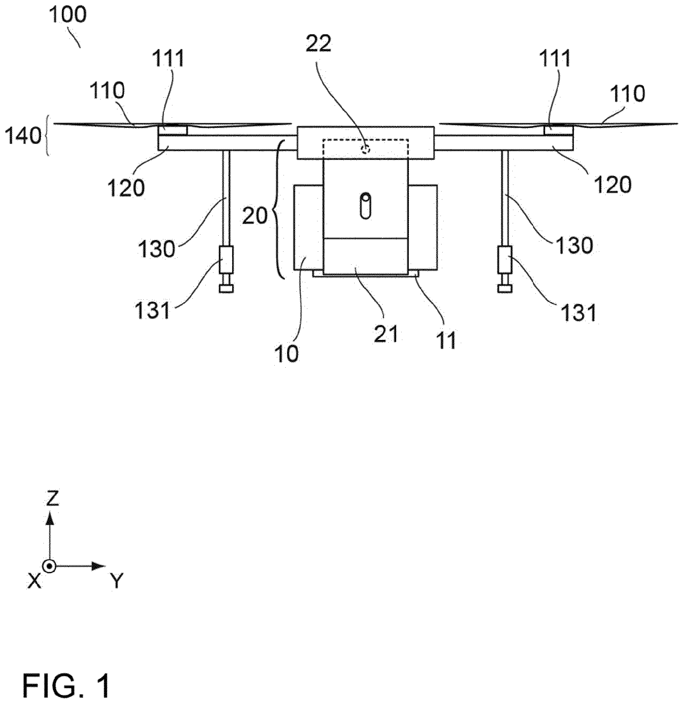

As shown in FIG. 1, the aircraft 100 according to this embodiment is equipped with a flight part 140 that includes a plurality of rotary wing parts comprising at least a propeller 110 and a motor 111, a frame 120 that connects the rotary wing parts and other elements for flight, and energy to operate them (for example, a secondary rechargeable batteries, fuel cells, fossil fuels, etc.) on board. The aircraft can be a single-rotor aircraft or a fixed-wing aircraft, but it is preferable to use a VTOL aircraft capable of vertical takeoff and landing or a so-called multicopter, a rotary-wing aircraft with multiple rotor blades, especially for home delivery applications to individuals. By using an aircraft that can take off and land vertically, it is possible to reduce the size of the surrounding facilities, including the takeoff and landing ports.

The illustrated aircraft 100 is depicted in simplified form to facilitate the explanation of the structure of the invention, and the detailed configuration of the control part, for example, is not shown.

The aircraft 100 is moving forward in the direction of arrow D (-Y direction) in the figure (see below for details).

In the following explanation, the terms may be used according to the following definitions. Forward and backward: +Y and -Y, up and down (or vertical): +Z and -Z, left and right (or horizontal): +X and -X, forward (forward direction): -Y, backward (backward direction): +Y, ascending direction (upward): +Z, descending direction (downward): -Z

The propeller 110 rotates under the output from the motor 111. The rotation of the propeller 110 generates propulsive force to take the aircraft 100 off from its starting point, move it, and land it at its destination. The propeller 110 can rotate to the right, stop, and rotate to the left.

The propeller 110 provided by the aircraft of the invention has one or more blades. Any number of blades (rotors) (e.g., 1, 2, 3, 4, or more blades) is acceptable. The shape of the blades can be any shape, such as flat, curved, kinked, tapered, or a combination thereof. The shape of the blades can be changeable (e.g., stretched, folded, bent, etc.). The blades can be symmetrical (having identical upper and lower surfaces) or asymmetrical (having differently shaped upper and lower surfaces). The blades can be formed into airfoils, wings, or any geometry suitable for generating dynamic aerodynamic forces (e.g., lift, thrust) when the blades are moved through the air. The geometry of the blade/vane/wing can be selected as appropriate to optimize the dynamic aerodynamic characteristics of the vane, such as increasing lift and thrust and reducing drag.

The propeller provided by the aircraft of the invention may be, but is not limited to, fixed pitch, variable pitch, or a mixture of fixed and variable pitch.

The motor 111 produces rotation of the propeller 110; for example, the drive unit can include an electric motor or engine. The blades can be driven by the motor and rotate around the axis of rotation of the motor (e.g., the long axis of the motor).

The blades can all rotate in the same direction or can rotate independently. Some of the blades rotate in one direction while others rotate in the other direction. The blades can all rotate at the same RPM, or they can each rotate at a different RPM. The number of rotations can be determined automatically or manually based on the dimensions of the moving object (e.g., size, weight) and control conditions (speed, direction of movement, etc.).

The aircraft 100 determines the number of revolutions of each motor and the angle of flight according to the wind speed and direction by means of a flight controller, radio, or other device. This allows the aircraft to move up and down, accelerate and decelerate, and change direction.

The aircraft 100 can fly autonomously according to routes and rules set in advance or during the flight, or by using a radio to control the aircraft.

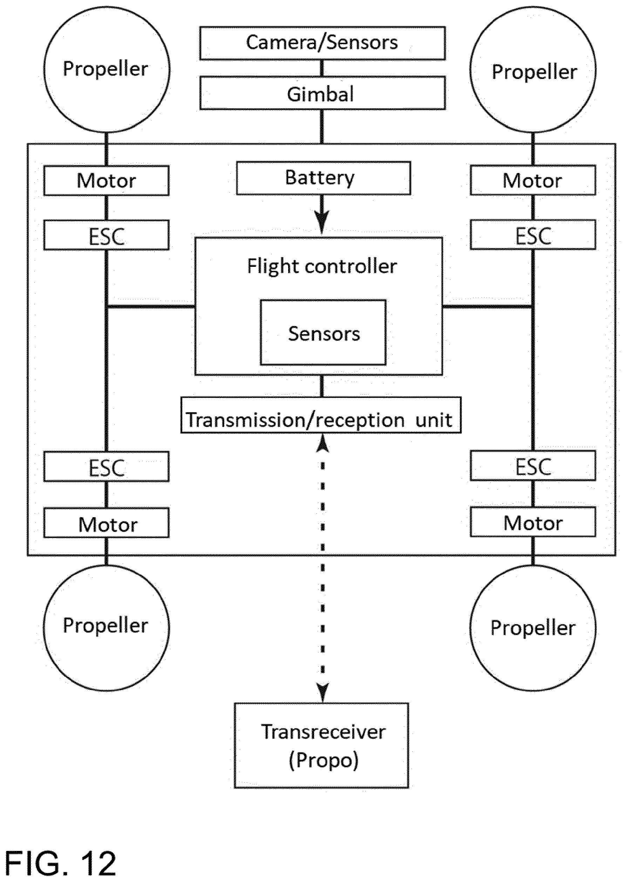

The aircraft 100 described above has the functional blocks shown in FIG. 12. The functional blocks in FIG. 12 are a minimum reference configuration. The flight controller is a so-called processing unit. The processing unit can have one or more processors, such as a programmable processor (e.g., central processing unit (CPU)). The processing unit has a memory, not shown, which is accessible. The memory stores logic, code, and/or program instructions that can be executed by the processing unit to perform one or more steps. The memory may include, for example, a separable medium such as an SD card, random access memory (RAM), or an external storage device. Data acquired from cameras and sensors and the like may be directly transmitted to and stored in the memory. For example, still and moving image data captured by a camera or other device can be recorded in the internal or external memory.

The processing unit includes a control module configured to control the state of the rotorcraft. For example, the control module controls the propulsion mechanism (e.g., motor) of the rotorcraft to adjust the spatial arrangement, velocity, and/or acceleration of the rotorcraft having six degrees of freedom (translational motion x, y and z, and rotational motion θx, θy and θz). The control module can control one or more of the states of a mounted object 10 and sensors.

The processing unit is in communication with a transmission/reception unit configured to transmit and/or receive data from one or more external devices (e.g., terminals, displays, or other remote controllers). The transmitter/receiver can use any suitable means of communication, such as wired or wireless communication. For example, the transmission/reception unit can use one or more of the following: local area network (LAN), wide area network (WAN), infrared, wireless, WiFi, point-to-point (P2P) network, telecommunications network, or cloud communications. The transmission/reception unit can transmit and/or receive one or more of the following: data acquired by sensors or the like, processing results generated by the processing unit, predetermined control data, and user commands from a terminal or remote controller.

Sensors in this embodiment can include inertial sensors (accelerometers, gyroscopes), GPS sensors, proximity sensors (e.g., lidar), or vision/image sensors (e.g., cameras).

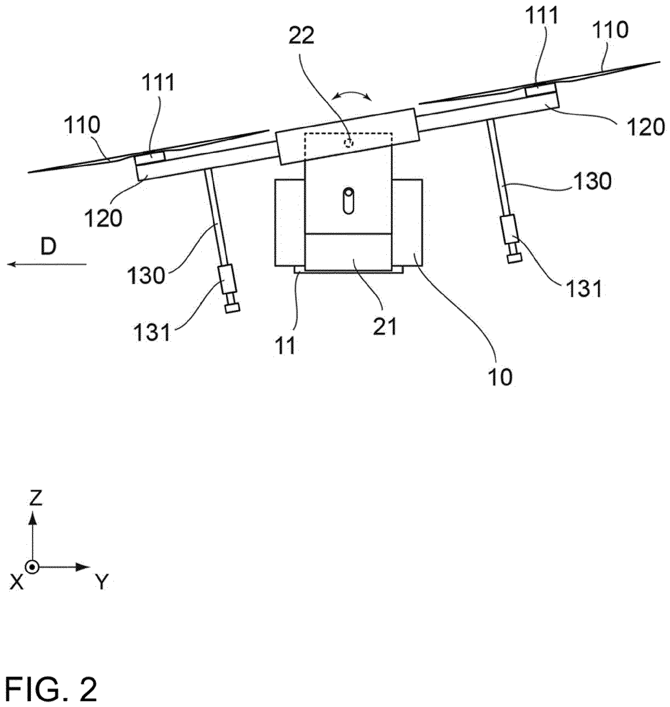

As shown in FIGS. 1 and 2, the flight part 140 provided by the aircraft 100 in this embodiment tilts forward toward the direction of travel when advancing. The forward-tilted rotor blades generate upward lift and thrust in the direction of travel, which propels the aircraft 100 forward.

The aircraft 100 is equipped with a holding mechanism 20 capable of holding luggage or a containment part for storing luggage or other items to be transported to a destination (hereinafter collectively referred to as the mounted object 10). The holding mechanism 20 is fixedly connected to the flight part 140 or independently displaceable through a connection part 22 such as a pivot axis or a gimbal having one or more degrees of freedom, as shown in FIGs. 1 and 2, to keep the mounted object 10 in a predetermined posture (e.g. horizontal) regardless of the attitude of the aircraft 100.

In addition to providing the connection part 22 between the flight part 140 and the holding mechanism 20 as a method of keeping the mounted object 10 in a predetermined position, the same effect is achieved by providing the connection part 22 between the holding mechanism 20 and the mounted object 10. In other words, it is desirable to provide the connection part 22 at one of the positions between the flight part 140 and the mounted object 10.

The position and direction of the rotary axis 50 used for displacement of the holding mechanism 20 or the mounted object 10 is determined by the posture that the aircraft 100 takes during flight. If the aircraft only moves forward or backward, the flight part will tilt in the forward/backward direction, so providing at least one axis that can rotate in the pitch direction will cancel the tilt of the flight part during flight and allow the mounted object to maintain its posture. In addition, to accommodate tilting in other axial directions (roll and yaw), two or more axes of rotation should be provided.

The displacement of the holding mechanism 20 or the mounted object 10 may be done by passive control, in which the posture is maintained by the dead weight of the object to be held, or by active control, in which the posture is controlled by a motor or other means. Active control is desirable for more precise posture control, but the control method should be determined appropriately according to the purpose, since additional mechanisms may increase the weight of the aircraft.

The holding mechanism 20 is comprised of a material that is strong enough to withstand flight and takeoff/landing while holding the mounted object 10. For example, resin, FRP, or the like are suitable materials for the holding mechanism because they are rigid and lightweight. When metals are used, aluminum, magnesium, or other materials with light specific gravity can be used to prevent weight increase while improving strength. These materials may be the same material as the frame 120 included in the flight part 140, or they may be different materials.

The motor mount (not shown) and frame 120 provided by the flight part 140 may be comprised by connecting their respective parts, or they may be molded as a single unit using a monocoque structure or integral molding (e.g., the motor mount and frame 120 are molded as a single unit). By integrating the parts, the joints between each part can be made smooth, which is expected to reduce drag and improve fuel efficiency.

It is preferable that the landing legs 130 equipped on the aircraft 100 is designed to prevent the mounted object 10 from experiencing impact by directly touching the landing surface 200 during the aircraft's landing. Specifically, in a side view of the landing configuration on a flat surface, the landing legs should be configured to extend below the mounted object 10 in the downward direction (-Z direction) to a greater extent. The landing legs 130 may further be provided with a shock absorbing device 131 such as a damper.

The aircraft 100 is equipped with a holding mechanism 20 that can hold the mounted object 10 so that it does not fall at unintended times, such as during flight or takeoff/landing, and the holding mechanism 20 has a holding part 21 that can release the mounted object 10 from the aircraft at predetermined times.

The aircraft 100 with the mounted object 10 flies to the airspace above the destination site and then lands.

After the aircraft 100 has landed, the holding mechanism 20 descends with the mounted object 10 held, and then releases the mounted object 10. At this time, the impact on the mounted object or the inclination of the mounted object is released so that the impact or inclination is within a predetermined range. The surface that the released object is in contact with (hereinafter collectively referred to as the loading surface 200) should be flat, such as a landing pad of a landing facility or port, and shaped in such a way that the released object does not lose its posture or tilt.

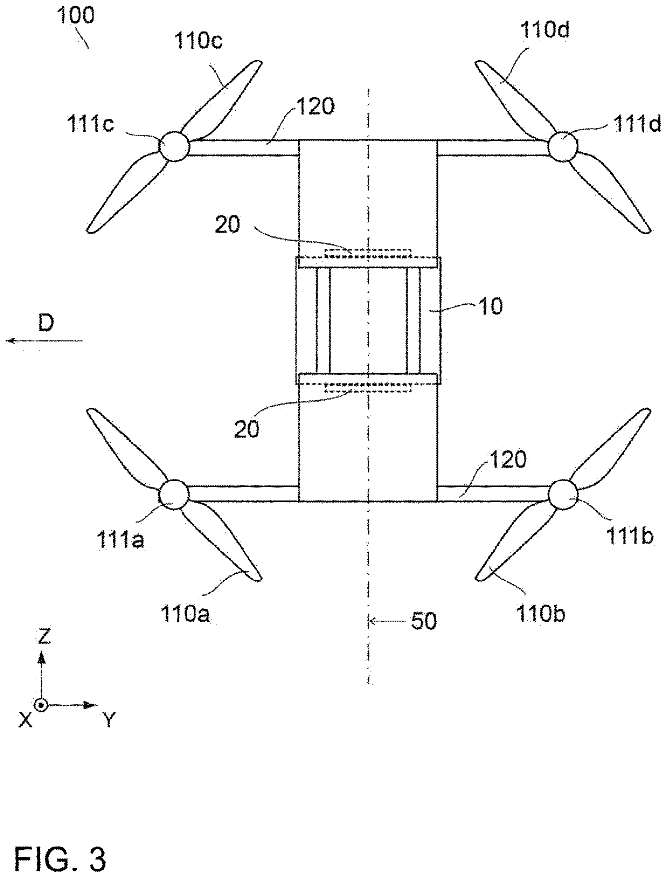

As shown in FIGs. 1-7, the holding mechanism 20 may hold the mounted object 10 by supporting the bottom of the mount 10 with the holding part 21. The aircraft 100 with the mounted object 10 on board moves forward toward the destination. If the flight part 140 and the holding mechanism 20 are independently displaceable and connected, as shown in FIG. 2, the mounted object 10 does not change its posture when the aircraft 100 is in a forward posture.

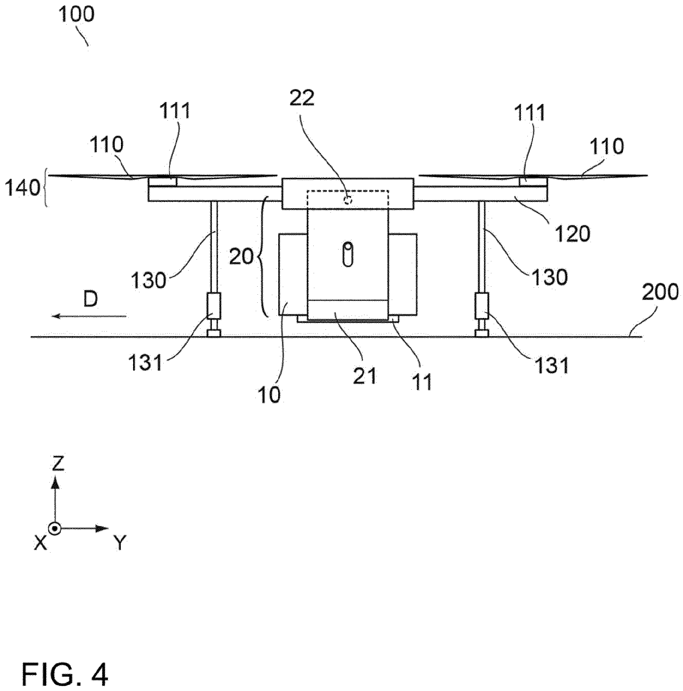

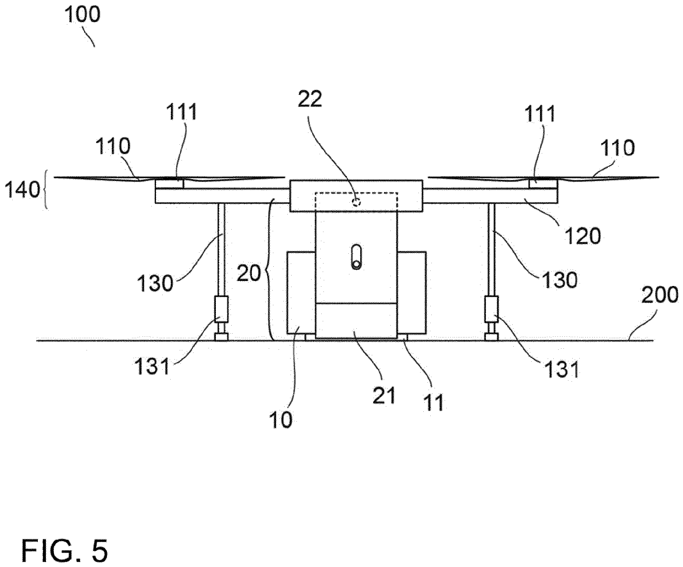

The holding mechanism 20 releases the mounted object 10 after the aircraft 100 has landed at its destination, as shown in FIGS. 4 and 5. In FIG. 5, the holding part 21 provided by the holding mechanism 20 moves vertically downward so that a raised platform member 11 provided on the mounted object 10 is grounded on the loading surface 200. After the raised platform member 11 is grounded, the holding part 21 is further lowered so that the mounted object 10 is no longer held and is released.

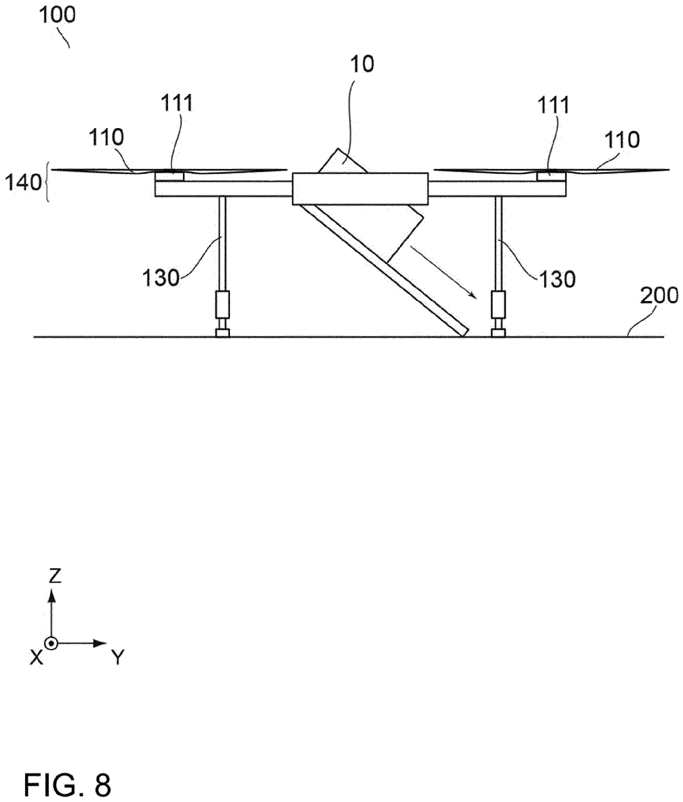

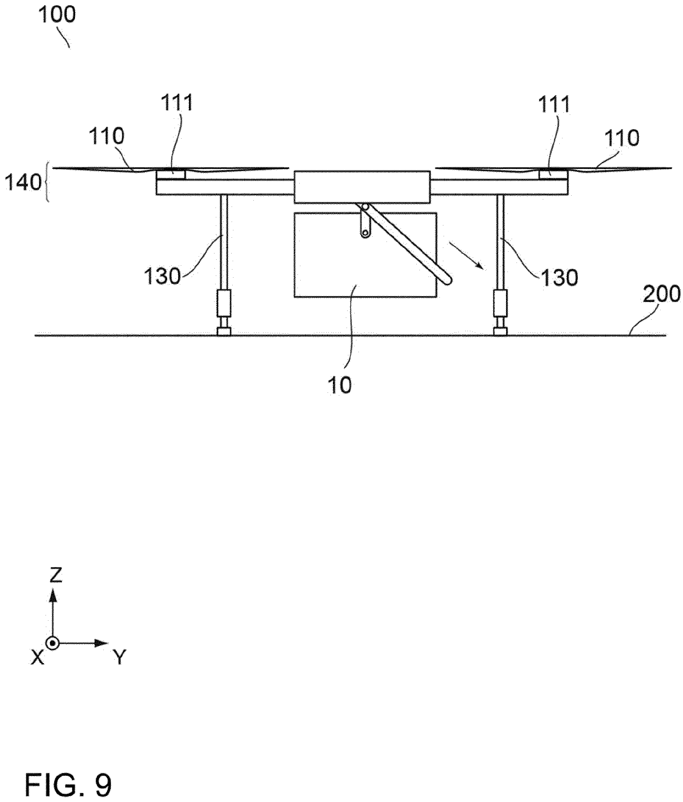

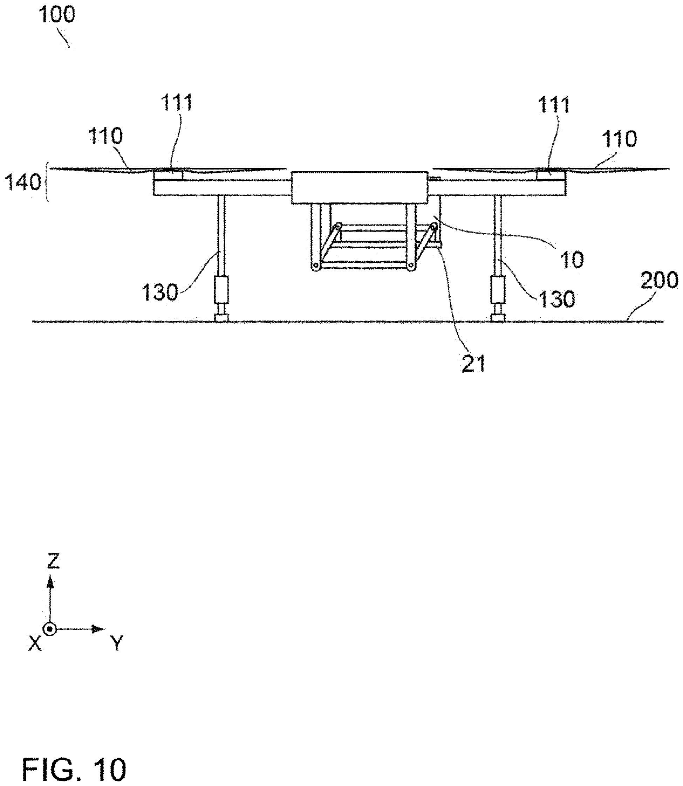

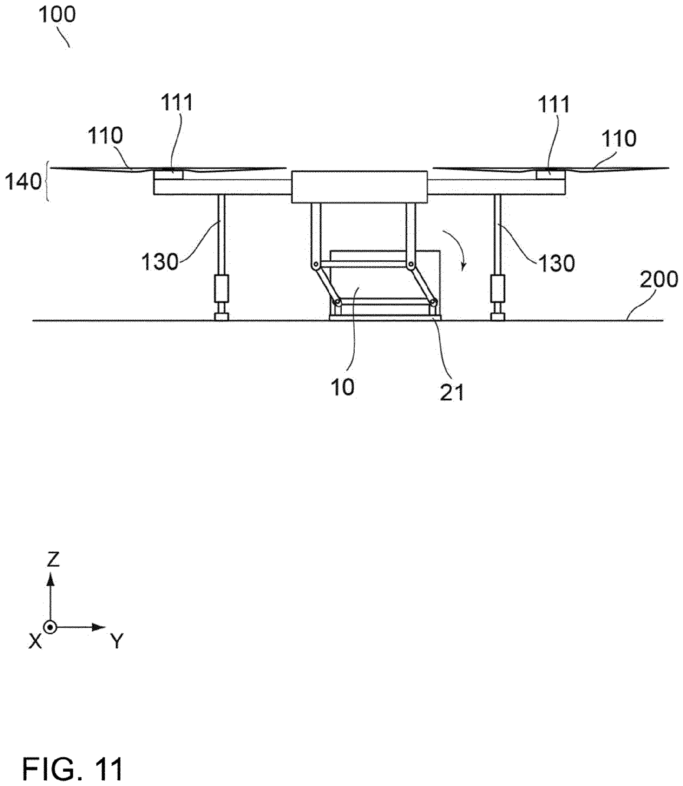

Methods of raising and lowering the mounted object 10 include raising and lowering the holding part 21 by motor, servo, etc., feeding by gear or belt, winding up and down a string or band member, and descending by its own weight with the speed limited by a damper, etc. However, this is not limited to these methods, as long as they can accomplish the task of descending and releasing the mounted object so that the impact given to the mounted object is within a predetermined range of impact after the aircraft has landed. The movement of the mounted object is not limited only to the vertical direction during ascent and descent, but may also include horizontal and diagonal movement in the left/right and front/back directions as necessary. Even when the direction of movement during descent is not vertical, the posture of the mounted object 10 is likely to tilt significantly if a slider is used as illustrated in FIG. 8, for example. Therefore, for example, as shown in FIG. 9, the posture of the mounted object can be slid while keeping it horizontal so that the tilt does not become greater than a predetermined angle, or, as shown in FIGS. 10-11, a mechanism combining a parallel link mechanism and a pivoting axis can be used to make the posture of the mounted object horizontal by using the pivoting motion of the link.

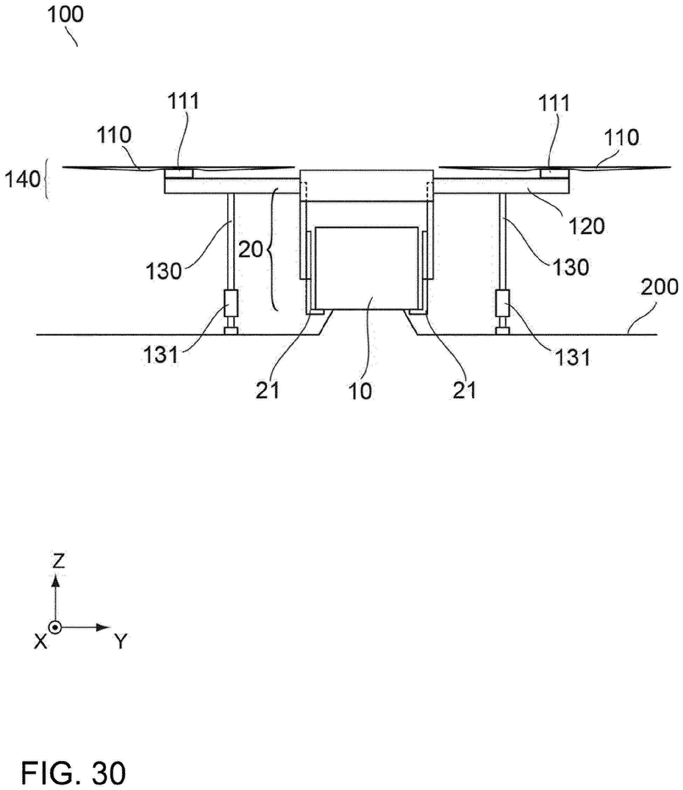

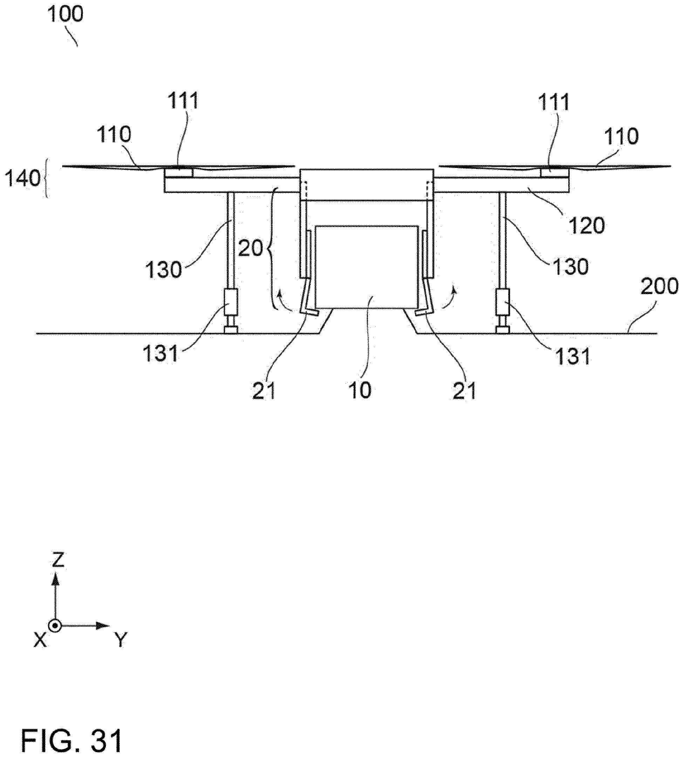

When holding the bottom surface, to ensure that the mounted object 10 is lowered to the loading surface 200 and released smoothly from the holding part 21, it is desirable that either the loading surface 200 or the mounted object 10 be provided with a relief part for the holding part to operate. When provided on the loading surface 200, as shown in FIG. 30 and FIG. 31, a convex portion with an area large enough for the mounted object 10 to stand stably on its own and surrounded by a relief part for the holding part 21 can be used to release the mounted object 10 without impacting the mounted object 10.

The lowering method and speed of the holding part 21 and the position (height, etc.) at which the mounted object 10 is released should be determined so that the impact on the mounted object is of a predetermined magnitude, based on various conditions such as the type, size, and weight of the mounted object and the material of the landing surface 200, etc. For a smaller impact, it is desirable to slow the rate of descent of the mounted object when it touches the ground and to set the release position at the point where a portion of the mounted object 10 touches the ground. However, this will cause a reduction in the overall speed of unloading.

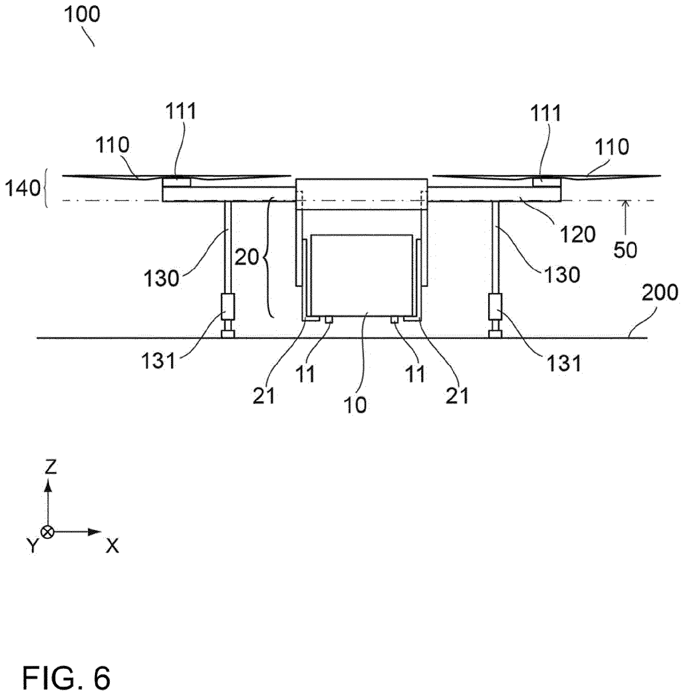

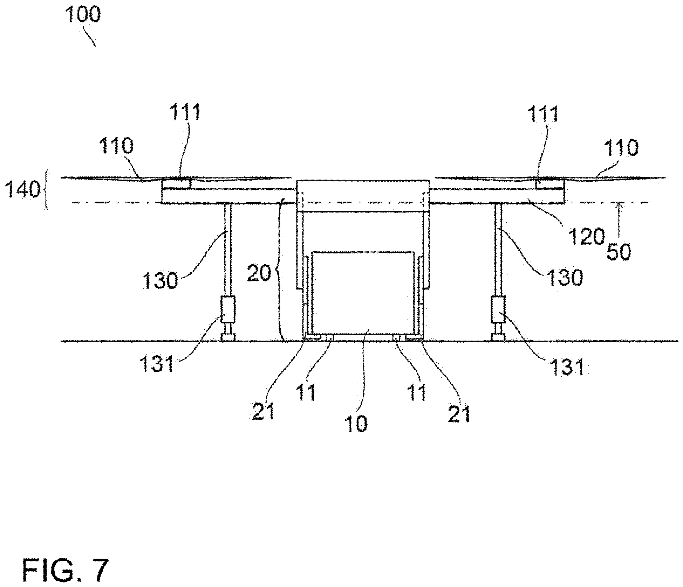

In the case of doing so without the installation of a dedicated landing port or other facility for courier aircraft, the same effect can be achieved by providing a relief part in the mounted object 10. For example, as shown in FIG. 6 or FIG. 7, by providing a thin rectangular raised platform member 11 at the bottom of the rectangular mounted object 10, the mounted object 10 stands stably on the loading surface 200 by the raised platform member 11, and the holding part 21 performs the release operation smoothly without friction with the mounted object 10 or impacting the mounted object 10.

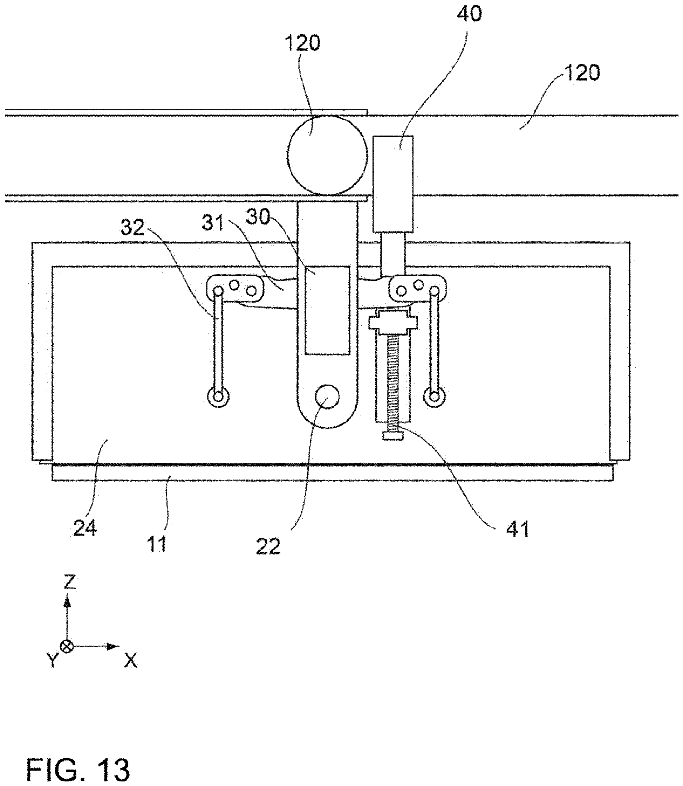

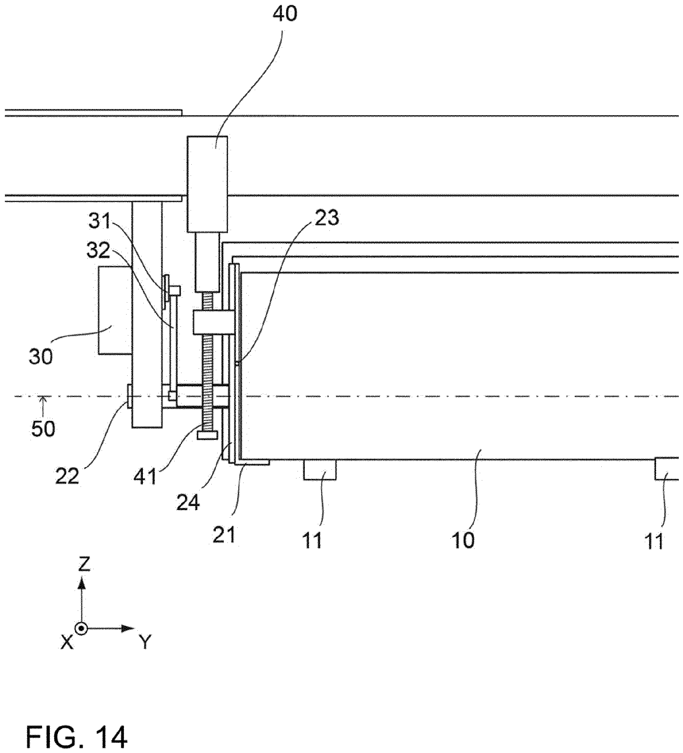

FIGS. 13 and 14 show enlarged views of an example of the holding mechanism 20 when the bottom of the mounted object 10 is held. The holding part 21, which supports the bottom of the mounted object 10, can be raised and lowered by rotation of the motor 40 connected to the all-threaded rod 41. Furthermore, a hinge 23 provided in the center of the vertical direction allows the holding part 21 to be rotated outward in the left and right directions (+X direction) to release the mounted object 10 after the mounted object 10 has reached the loading surface 200. The release by the hinge 23 can be done, for example, by using a hinge (generally called a spring hinge or the like) that opens when the hinge moves downward from the cover part 24 using spring reaction force, or by providing a rod that connects to a servo or the like on the outside in the left-right direction.

A servo 30 and a horn 31 shown in FIG. 13 are connected to cover part 24 via a rod 32. When the servo 30 operates, the cover part 24 and mounted object 10 rotate about the axis of connection part 22 to control the posture of mounted object 10.

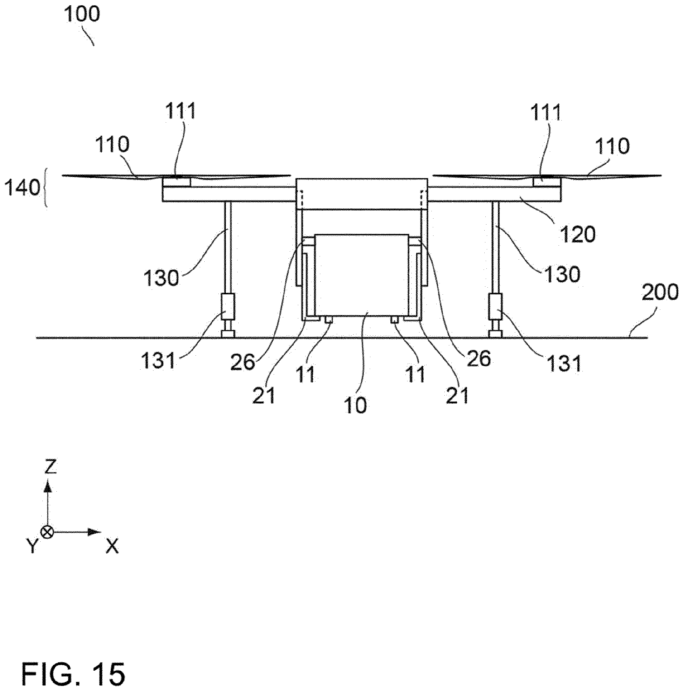

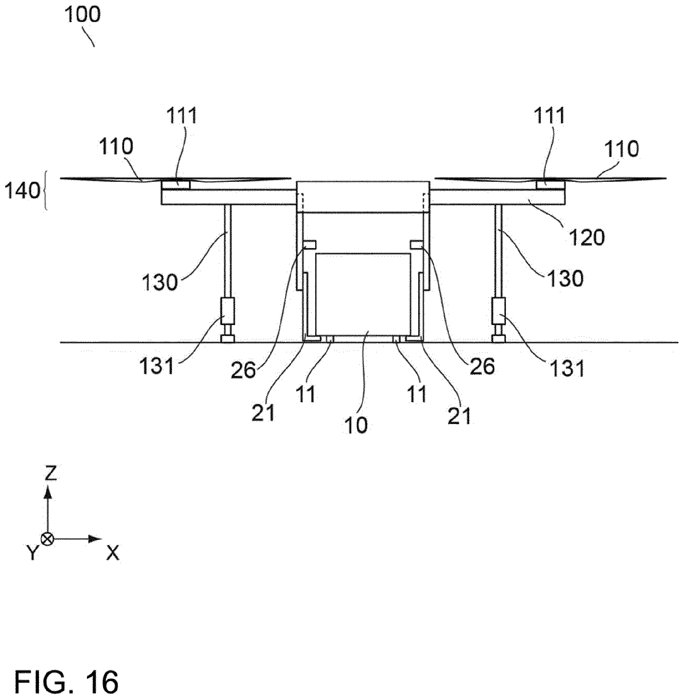

As shown in FIGS. 15 and 16, a retaining part 26 is provided to prevent the mounted object 10 from shifting back and forth during flight of the aircraft 100. The retaining part 26 is a member (e.g., a protrusion integrated with a covering part, a plate, a roller mechanism, a cushioning material, etc.) that is provided inwardly from the holding part 21 and the cover or the like (hereinafter collectively referred to as the covering part) that covers the mountings. To prevent slipping or rocking of the mounted object 10, it is desirable that the mounted object 10 be mounted between the mounted object 10 and the covering part without any room for the mounted object 10 to move. However, the smaller the gap between the mounted object 10 and the covering part, the greater the possibility of the covering part contacting the mounted object 10 and impacting the object 10 when the aircraft 100 takes off after releasing the object 10.

It is difficult to accurately take off the aircraft 100 vertically upward once it has landed, especially outdoors where it is affected by wind. Therefore, it is desirable to have a clearance between the mounted object 10 and the covering part to prevent contact between the mounted object 10 and the covering part when the aircraft 100 takes off at an angle upward. In order to prevent both the rocking of the mounted object 10 during flight and contact with the covering part when the aircraft 100 takes off again, the position of the retaining part 26 should be at a height that inhibits unintended movement of the mounted object 10, at least during flight. And it should be at a height that does not inhibit the movement of the mounted object 10 once the mounted object 10 has completed its descent by the holding mechanism 21. The retaining part 26 allows for clearance between the mounted object 10 and the covering part when the aircraft 100 takes off again, while reducing the wobble of the mounted object 10 during flight.

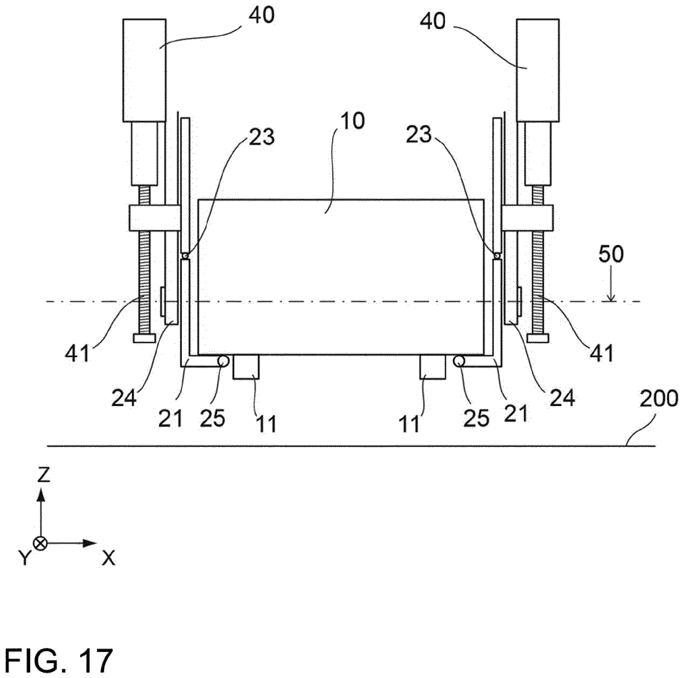

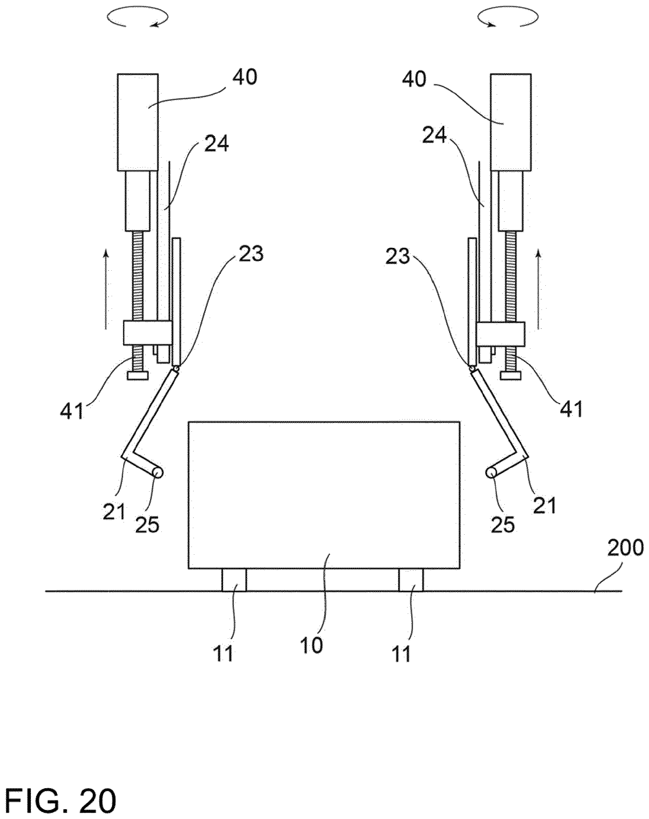

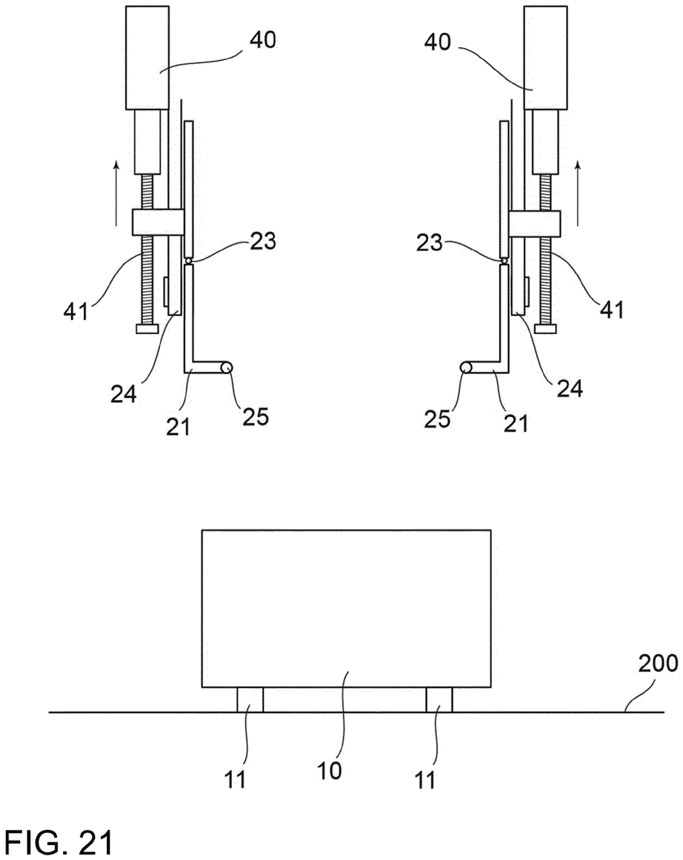

In FIGS. 17- 21, the flow of the mechanism of FIG. 14 from after landing the aircraft to releasing the mounted object and taking off again is shown in a conceptual diagram. FIGS. 17-21 are drawn in a simplified manner to facilitate the description of the structure for unloading, and elements such as, for example, the landing legs 130 and the frame 120 of the aircraft are not shown.

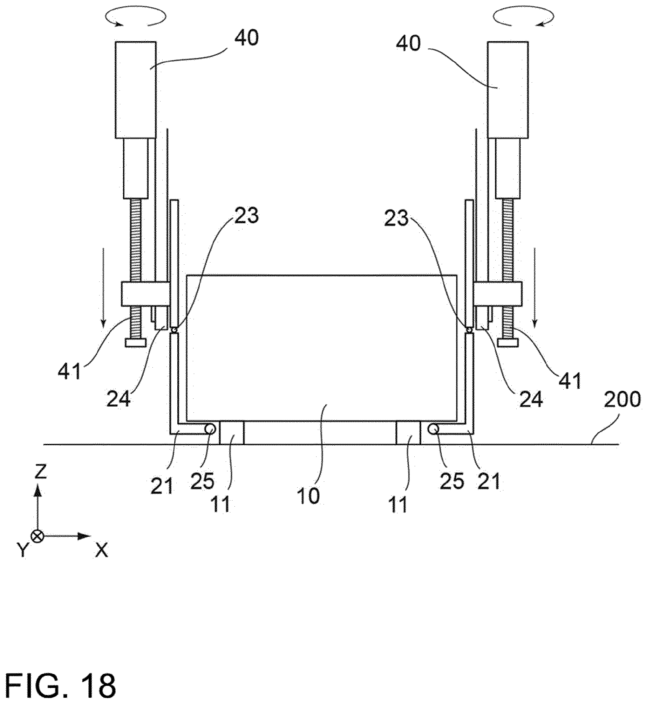

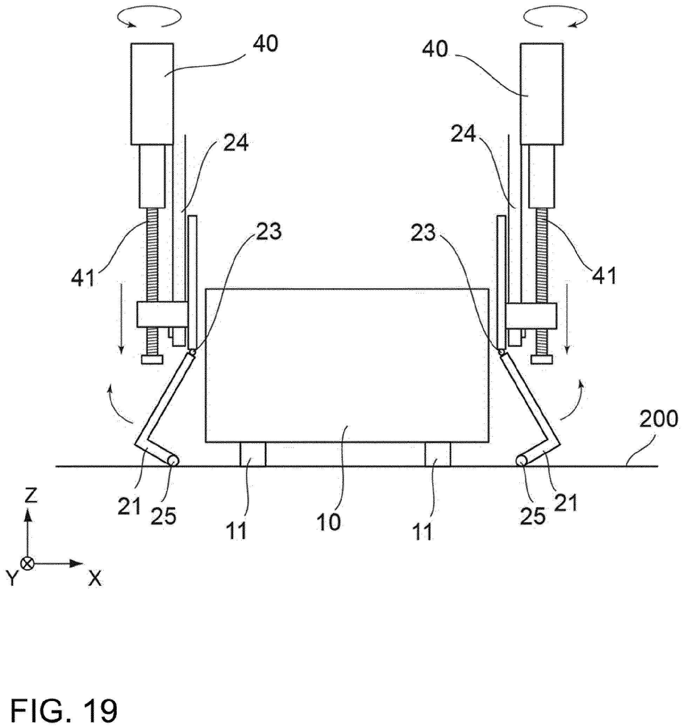

First, as shown in FIG. 17, the aircraft has landed, the distance between the loading surface 200 and the mounted object 10 is far apart. The mounted object 10 and the holding part 21, which supports the mounted object 10 from the bottom, are connected to the all-threaded rod 41 via a guide and are lowered as the motor 40 rotates, as shown in FIG. 18. As the descent continues, first, the raised platform member 11 contacts the loading surface 200, and as the descent proceeds further, the holding part 21 ceases to hold the mounted object 10 and the mounted object is released. As descent proceeds further, the position of hinge 23, which uses a spring hinge that tries to open outward in the left-right direction, falls below cover part 24. The hinge 23, which has lost the cover part 24 that holds it down, is then pushed outward, as shown in FIG. 19.

With the hinge 23 pushed open, the aircraft takes off again. This allows the holding mechanism to be extracted without the holding part 21 or other parts touching the mounted object 10 released on the loading surface. After takeoff and after a sufficient distance has been secured between the aircraft and the mounted object, the holding part 21 is raised by the rotation of the motor 40, and the opened hinge 23 is closed by being held down by the cover part.

The holding part 21 may have rollers 25 or the like at the ends to prevent snagging if the aircraft wobbles or otherwise touches the mounted object 10 during re-takeoff.

### <Details of the second embodiment>

In the details of the second embodiment of this invention, the components that overlap with those of the first embodiment operate in the same manner, so they will not be described again.

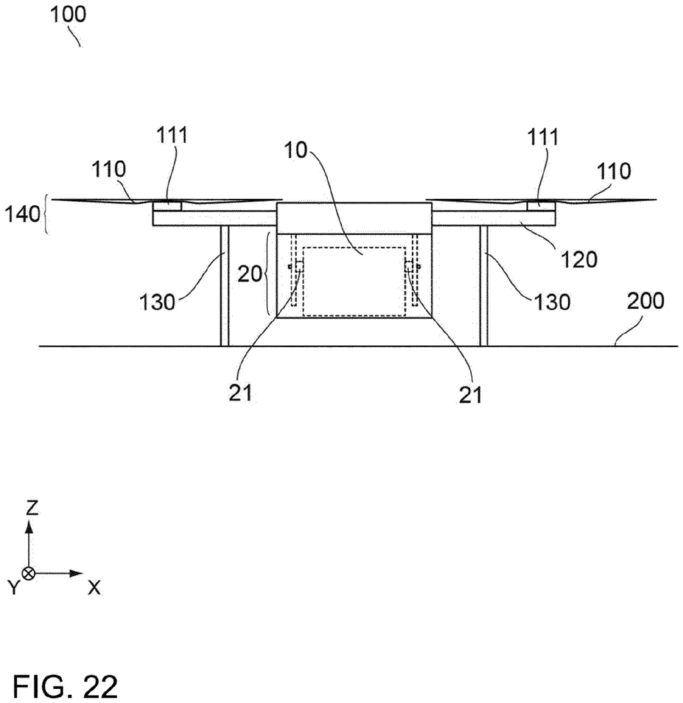

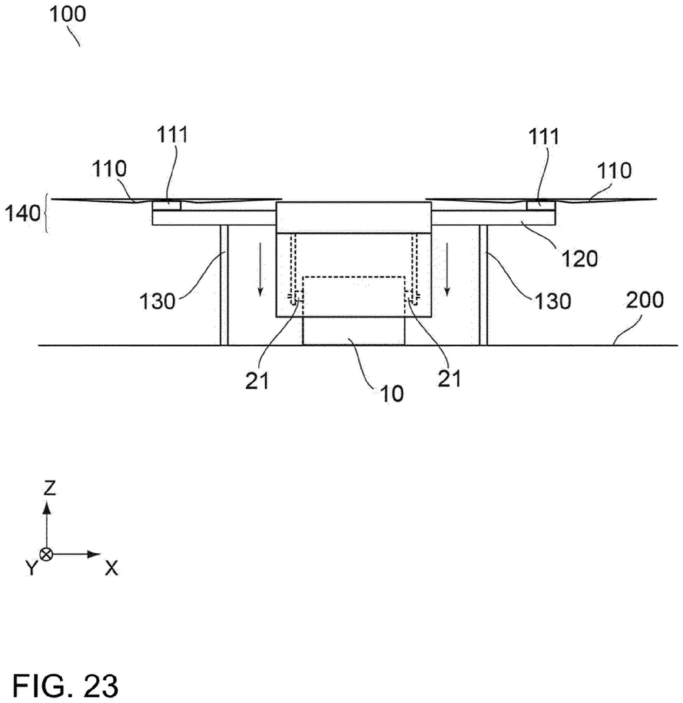

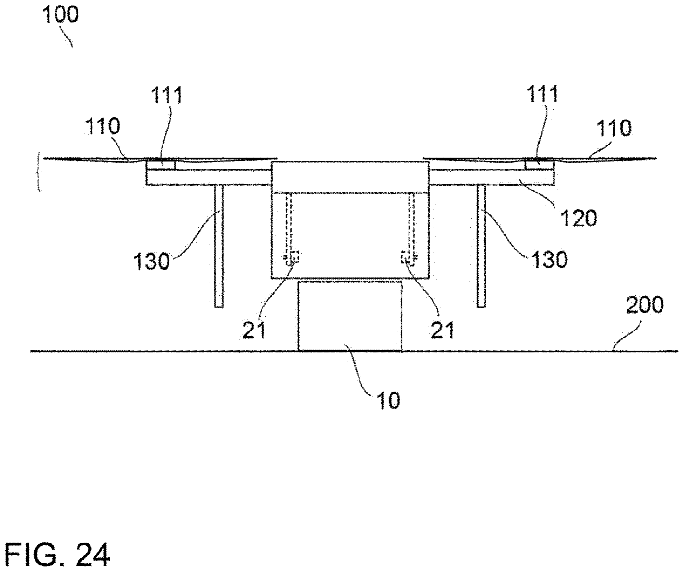

As shown in FIGS. 22 - 24, the holding mechanism 20 may be connected to the side of the mounted object 10 and hold the mounted object 10. The connection method may include piercing a needle-shaped member into the side of the mounted object, providing a hole or slit in the side of the mounted object and inserting the holding part 21, or adsorbing and releasing it by magnetic force or negative pressure. However, they are not limited to these methods, as long as the mounts are connected in such a way that they do not drop or sway unintentionally.

When holding at the side, there is no need for a raised platform member, etc. at the bottom of the mounted object or a convex part on the loading surface 200, as there is no need for a relief part that serves as a pull-out space for the holding part 21, as in the first embodiment, where the mounted object is supported from the bottom.

In addition, although the side holding can hold the mounted object without a lid on the bottom or the like, a waterproof, dustproof, or other effective lid may be provided to open and close the lid so that it does not become an obstacle when the object is lowered and released.

### < Details of the third embodiment>

In the details of the third embodiment of this invention, the components that overlap with those of the first and second embodiments operate in the same manner, so they will not be described again.

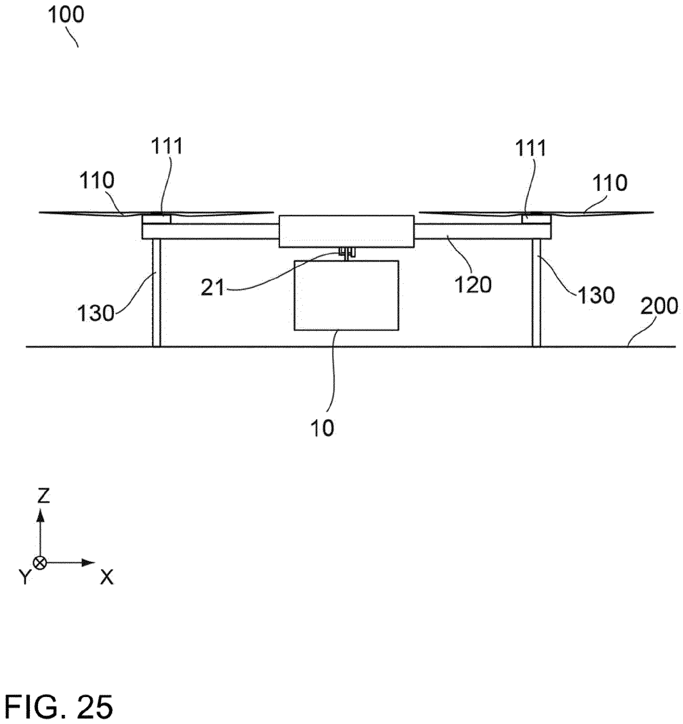

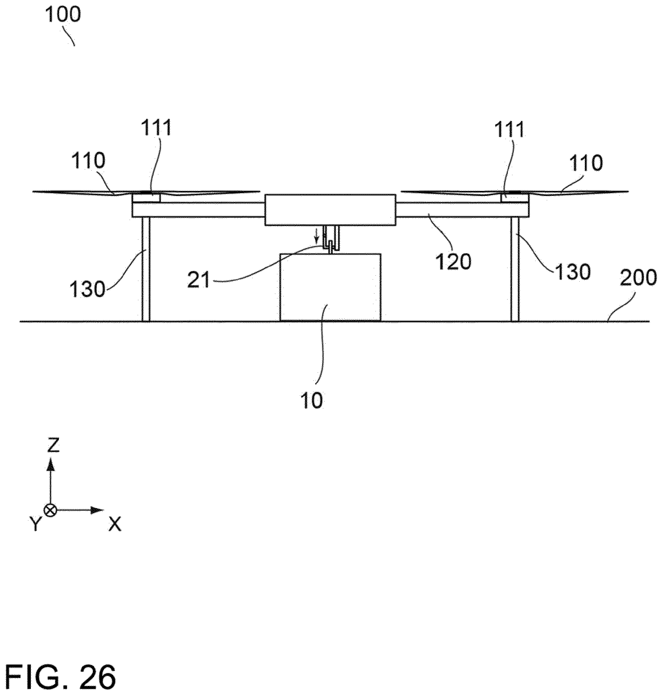

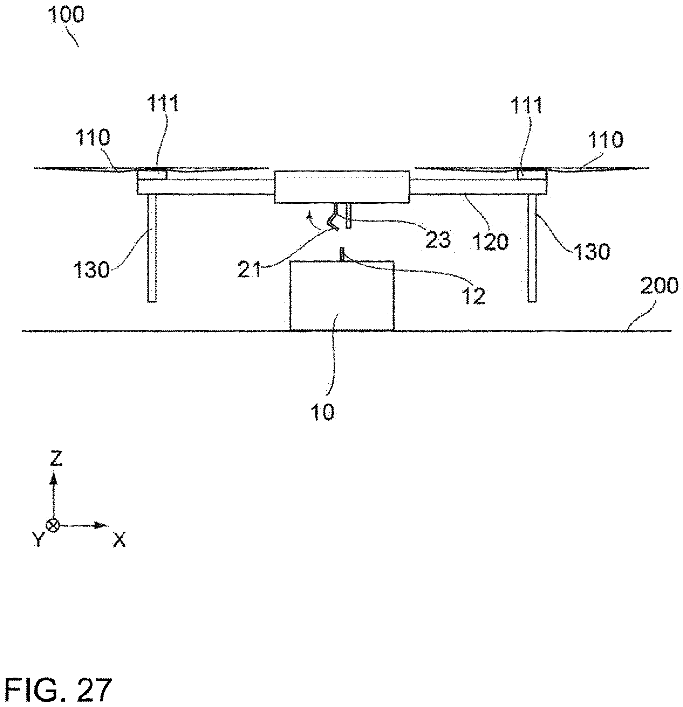

As shown in FIGS. 25 - 27, the holding mechanism 20 may be connected to the top surface of the mounted object 10 and held in place. The method of connection may include, but is not limited to, adsorption by magnetic force or negative pressure, or by hooking the holding part 21, as long as the mount is connected in such a way that it will not drop or swing unintentionally.

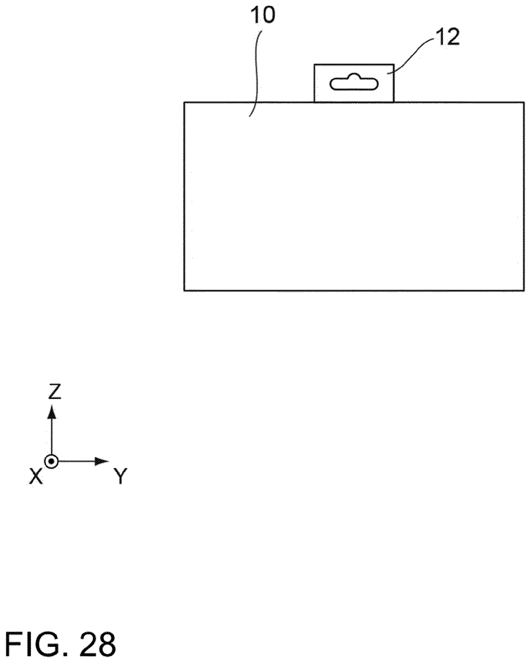

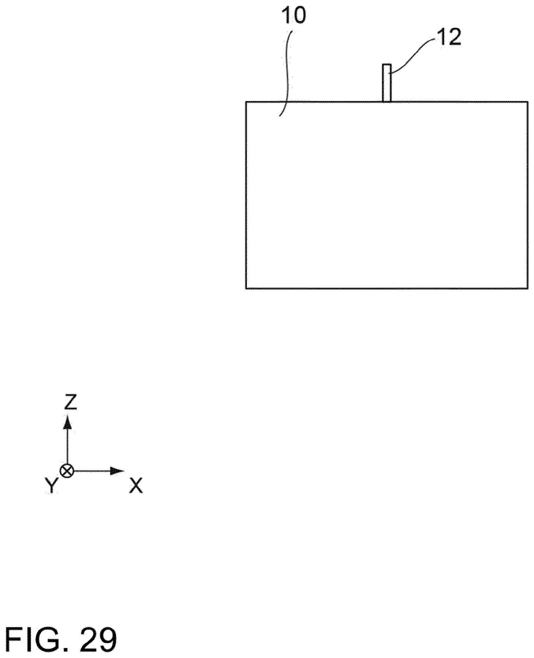

When using the method of hooking the holding part 21, for example, a plate-like member with holes as shown in FIGs. 28 and 29 may be used as the holding part insert member 12.

When holding the mounted object at the top, there is no need for a raised platform member, etc., at the bottom of the mounted object or a convex part on the loading surface 200, because there is no need for a relief part that serves as a space for pulling out the holding part as in the first embodiment, where the part is supported from the bottom.

In addition, in the method of holding the mounted object at the bottom or side, holding parts must be provided on each side in many cases, but in the method of holding the mounted object by connecting it to the top, only one holding mechanism is required, which is expected to reduce the weight of the aircraft.

The aircraft in each of the embodiments can comprise a combination of multiple configurations. It is desirable to comprise a suitable configuration in accordance with the cost in manufacturing the aircraft and the environment and characteristics of the location where the aircraft will be operated.

The above mentioned embodiments are merely examples to facilitate understanding of the invention and are not intended to be construed as limiting the invention. It goes without saying that the invention may be changed and improved without departing from its purpose, and that the invention includes its equivalents.

### [DESCRIPTION OF REFERENCE NUMERALS]

10 Mounted object
11 Raised platform member
12 Insert member
20 Holding mechanism
21 Holding part
22 Connection part
23 Hinge
24 Cover part
25 Roller
40 Motor
41 Full-threaded rod
50 Axis of rotation
100 Aircraft
110a-110h Propeller
111a-111h Motor
120 Frame
130 Landing legs
131 Damper
140 Flight part
200 Landing surface (loading surface)

## Claims

1. An aircraft equipped with a holding mechanism that holds a payload,
wherein the holding mechanism is designed to move the payload at least vertically downward while maintaining its horizontal orientation upon contact of landing legs with the ground.

2. The aircraft of claim 1,
wherein the holding mechanism is designed to move the payload until it touches the ground.

3. The aircraft as in claims 1 or 2,
wherein the holding mechanism has a holding part that holds the bottom of the payload.

4. The aircraft as in any one of claims 1 to 3,
wherein the payload has a base member having a predetermined height at its bottom.

5. The aircraft as in claims 1 or 2,
wherein the holding mechanism has a holding part that holds a side portion of the payload.

6. The aircraft as in claims 1 or 2,
wherein the holding mechanism has a holding part that holds the upper portion of the payload.

7. A method for loading a payload using an aircraft equipped with a holding mechanism, comprising:
a step of moving the payload at least vertically downward while holding the payload horizontally using the holding mechanism of the aircraft, after the landing legs of the aircraft has touched the ground.

8. A system of executing a loading method on an aircraft equipped with a holding mechanism, comprising:
a processor that is equipped on the aircraft and executes the loading method,
wherein the loading method comprises a step of moving the payload at least in a downward vertical direction while maintaining the payload in a horizontal position using the holding mechanism of the aircraft after the landing legs of the aircraft is in contact with the ground.

9. A program for executing a loading method on an aircraft equipped with a holding mechanism by a processor installed in the aircraft,
wherein the loading method comprises a step of using the holding mechanism to move the payload at least vertically downwards while maintaining its horizontal orientation after the landing legs of the aircraft has touched down.
